# EUROPEAN PATENT APPLICATION

(11) **EP 3 438 910 A1**
(43) Date of publication of application: **06.02.2019**
(21) Application number: 17185027.4
(22) Date of filing: 04.08.2017
(51) Int. Cl.: G06Q 30/06, G06Q 50/12

(54) **MENU GENERATION METHOD AND SYSTEM**

(71) Applicant: Gurunavi, Inc., Tokyo 100-0006 (JP)
(72) Inventor: WEINSANTO, Quentin, Chiyoda-ku, Tokyo 100-0006 (JP)
(74) Representative: D Young & Co LLP

(57) **Abstract**

A menu generation system for real-time generation of a restaurant menu. The system comprises an administrative device and an output device. The administrative device comprises a menu item storage module configured to store a plurality of potential menu items; a menu item property storage module configured to store menu item properties for each of the plurality of potential menu items wherein the menu item properties include at least one or more ingredients that are used in each of the plurality of potential menu items; a specification input module configured to receive specification information comprising at least one of user requirement information or restaurant status information; a menu item information processing module that is configured to determine a plurality of actual menu items and corresponding descriptions by applying the received specification information to the plurality of potential menu items and corresponding properties; a menu generation module configured to generate a menu based on the actual menu items and corresponding descriptions. The output device is communicatively connected to the administrative device and is configured to output the generated menu.

## Description

### FIELD AND BACKGROUND

The present disclosure relates to a system and method for use in real-time generation of a restaurant menu. This is particularly useful for, but not limited to, people who suffer from serious diet-related medical conditions and/or the reduction of waste in a facility such as a restaurant.

People who suffer from serious diet-related medical conditions, such as nut allergies or diabetes, must take great care when obtaining food or drink from unfamiliar sources such as restaurants. Conventional approaches rely on either the sufferer's own knowledge, or the assistance of staff at the food source, of what ingredients particular items of food or drink contain and which ingredients must be avoided for their condition.

However, as identified by the inventors of the presently claimed invention, in addition to requiring an available individual with such expert knowledge, conventional approaches can be very time consuming and error prone when sorting through all the items available at a food source to identified which food and drink items can be safely consumed.

These problems can be further exacerbated when a sufferer travels to country where they are not familiar with the language.

As such, people who suffer from serious diet-related medical conditions currently may either have to be very conservative in what food or drink they consume from unfamiliar sources and/or face a significant risk of suffering adverse reactions.

Additionally, if a restaurant or a facility wishes to cater to the possible dietary / medical needs of customers, they would have to have a large number of different menus available or a large number of indicators on a menu, which can be confusing for a user.

At least certain embodiments of the present disclosure address one or more of these problems as set out above.

### SUMMARY

The invention is defined by the appended claims.

According to a first aspect of the present disclosure, there is provided a menu generation system for real-time generation of a restaurant menu. The system comprises an administrative device and an output device. The administrative device comprises a menu item storage module configured to store a plurality of potential menu items; a menu item property storage module configured to store menu item properties for each of the plurality of potential menu items wherein the menu item properties include at least one or more ingredients that are used in each of the plurality of potential menu items; a specification input module configured to receive specification information comprising at least one of user requirement information or restaurant status information; a menu item information processing module that is configured to determine a plurality of actual menu items and corresponding descriptions by applying the received specification information to the plurality of potential menu items and corresponding properties; a menu generation module configured to generate a menu based on the determined actual menu items and corresponding descriptions. The output device is communicatively connected to the administrative device and is configured to output the generated menu. Thereby from one perspective, a menu generation system which generates and outputs a menu updated in real-time taking into account user requirement information and/or restaurant status information is provided.

According to a second aspect of the present disclosure, there is provided a method for real-time generation of a restaurant menu. The method comprising the steps of storing, by an administrative device, a plurality of potential menu items; storing, by an administrative device, properties for each of the plurality of potential menu items wherein the menu item properties include at least one or more ingredients that are used in each of the plurality of potential menu items; receiving, by an administrative device, specification information comprising at least one of user requirement information or restaurant status information; determining, by an administrative device, a plurality of actual menu items and corresponding descriptions by applying the received specification information to the stored plurality of potential menu items and corresponding properties; generating, by an administrative device, a menu based on the determined actual menu items and corresponding descriptions; outputting, by an output device, the generated menu. Thereby from one perspective, a menu generation method which generates and outputs a menu updated in real-time taking into account user requirement information and/or restaurant status information is provided.

Other aspects will also become apparent upon review of the present disclosure, in particular upon review of the Brief Description of the Drawings, Detailed Description and Claims sections.

### BRIEF DESCRIPTION OF THE DRAWINGS

Examples of the disclosure will now be described with reference to the accompanying drawings, throughout which like parts may be referred to by like references, and in which:
Figure 1 illustrates a real-time menu generation system.
Figure 2 illustrates an administrative device.
Figure 3 illustrates an output device.
Figure 4 illustrates an illustrative example of an administrative device.
Figure 5 illustrates a user input terminal.
Figure 6 illustrates a user requirement input interface.
Figures 7A, B illustrate a menu before and after adaptation for dietary requirements.
Figures 8A, B illustrate a menu before and after translation.
Figure 9 illustrates another illustrative example of an administrative device.
Figure 10 illustrates a management terminal.
Figures 11A, B illustrate a menu adapted for temporal context.
Figure 12 illustrates a menu adapted to indicate menu item availability.
Figure 13 illustrates a method for real-time generation of a restaurant menu.
Figure 14 illustrates a computing environment.

### DETAILED DESCRIPTION

The present disclosure provides for a system which is capable of generating a menu in real-time. The expression "real-time" as used in the present disclosure refers, for example, to the ability of the system to generate and output a menu "on-demand" and to do so on the basis of specific current information or requirements. The system, for example, thus provides for a personalised, accurate and/or up to date menu that can take into account, for example, requirements of a specific user requesting a menu or the current status of a restaurant. The term "user" as used in the present disclosure refers, for example, to any person who may use the system such as a customer, a waiter, an administrator, a member of kitchen staff or a tour operator.

For clarity and conciseness, the present disclosure predominantly refers to "restaurant menus" throughout. It is, however, contemplated that the examples of this disclosure are more broadly applicable. For example, the present examples may be applied to menus at other food or drink sources such as cafes, bars, pubs, clubs, sporting grounds or any other venue which offers food or drink. Furthermore, the present examples may be applied to other lists of available items at a venue such as entertainment options or personal services.

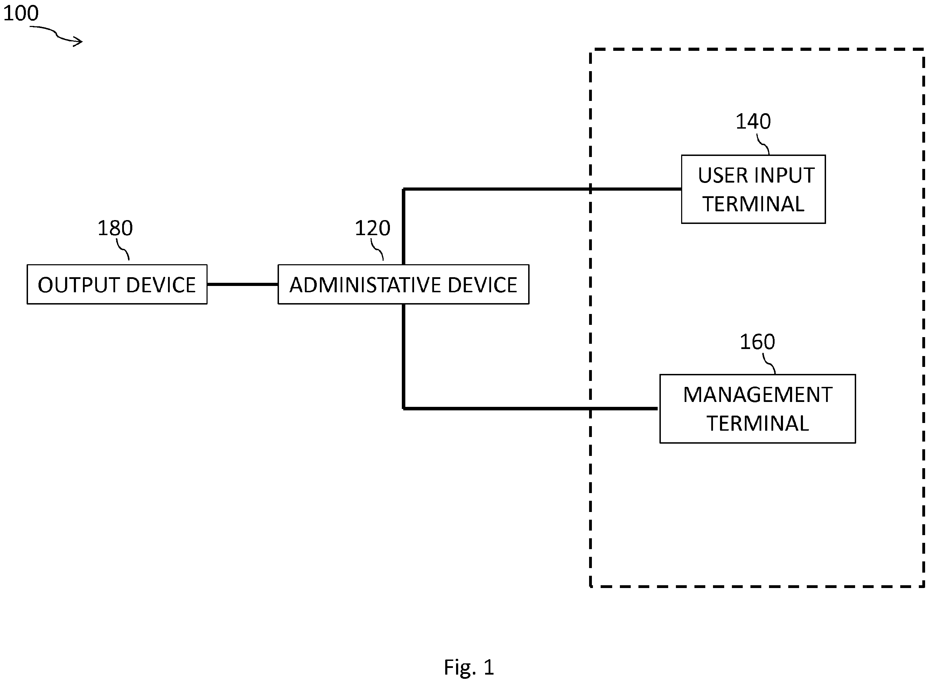

An example of a real-time menu generation system 100 is shown in Figure 1. The schematic illustration in this figure is illustrative of the elements which make up the real-time menu generation system 100. As shown in Figure 1, the real-time menu generation system 100 includes an administrative device 120 and an output device 180. The device may also include one or more of a user input terminal 140 or a management terminal 160.

In the present example, administrative device 120, management terminal 160, user input terminal 140 and output device 180 are depicted as separate devices. It is contemplated, however, that in other implementations that any of these elements may be combined with each other. For example, in some examples administrative device 120 and output device 180 may be combined as a single device and management terminal 160 and user input terminal 140 may be combined as a single terminal. In other example, administrative device 120, management terminal 160, user input terminal 140 and output device 180 may all be combined as a single device.

The above-described list of the elements which make up the real-time menu generation system 100 is not exhaustive and it is contemplated that the menu generation system may comprise further elements or itself may be part of a larger device.

The output device 180 is communicatively connected to the administrative device 120 and, where present, the management terminal 160 and user input terminal 140 are also communicatively connected to the administrative device 120.

The communicative connections can be any suitable communicative connection which allows information to be transferred between the devices and/or terminals. It is contemplated that the communicative connections can be a wired connection, such as Ethernet, USB or Firewire; a wireless connection, such as Bluetooth, Wi-Fi, cellular network or infrared; or a manual transfer using a computer-storage medium, such as CD, DVD, Blu-Ray, Memory Card or USB flash drive; according to the requirements of the particular implementation.

Each of the components of real-time menu generation system 100 will now be discussed in further detail below.

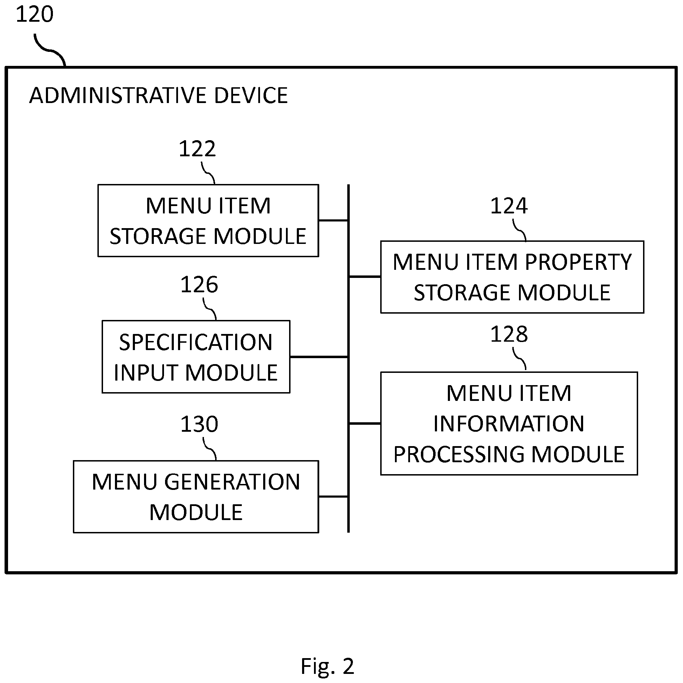

Figure 2 illustrates an administrative device 120 of the type depicted in Figure 1. The schematic illustration in this figure is illustrative of the elements which make up the administrative device 120. As shown in figure 2, the administrative device 120 includes a menu item storage module 122, a menu item property storage module 124, a specification input module 126, a menu item information processing module 128 and a menu generation module 130. In some examples, one or more of these elements may be optional.

The menu item storage module 122 is a module which is configured to store a plurality of potential menu items. This list of potential menu items can include both food and drink items and may represent every item that a restaurant is in principle able to offer.

The menu item property storage module 124 is a module which is configured to store corresponding properties for each of the plurality of potential menu items. The properties include at least one or more ingredients that are used in the potential menu items. In some implementations, the menu item property storage module 124 may store all the ingredients used for each of the potential menu items stored in the menu item storage module 122. Depending on the requirements of the implementation the ingredients stored may include only the bulk ingredients but in some examples may additionally include lesser ingredients such as seasonings or additives.

In some examples, the menu generation system 100 comprises, or has access to, a database of common menu items and wherein the properties for the one or more menu items in the menu item storage module 124 are automatically populated using the database of common menu items. Thus the need to separately enter in the properties may be avoided for common menu items.

It is contemplated that in some examples the menu item property storage module 124 may also include further properties of the potential menu items such as the cooking temperature, the ingredient source, religious/ethical certifications and/or one or more cooking styles.

As discussed in further detail below, the menu item property storage module 124 by storing property information is able to allow the administrative device 120 to process the potential menu items on the basis of their properties and thus to take these into account when determining actual menu items to be included on the output menu. In some examples, the actual menu items can include a simple descriptor of the menu item and/or ancillary information, such as the properties of the menu item or a verbose description.

The specification input module 126 is configured to receive specification information which are used in defining requirements which the administrative device 120 uses to determine the actual menu items and corresponding descriptions.

The specification information may be received by direct input into the specification input module 126 or may be accessible from a data source which is communicatively connected to or part of the specification input module 126. Particular examples of how specification information can be received are given in the examples given below.

The specification information includes at least one of user requirement information or restaurant status information.

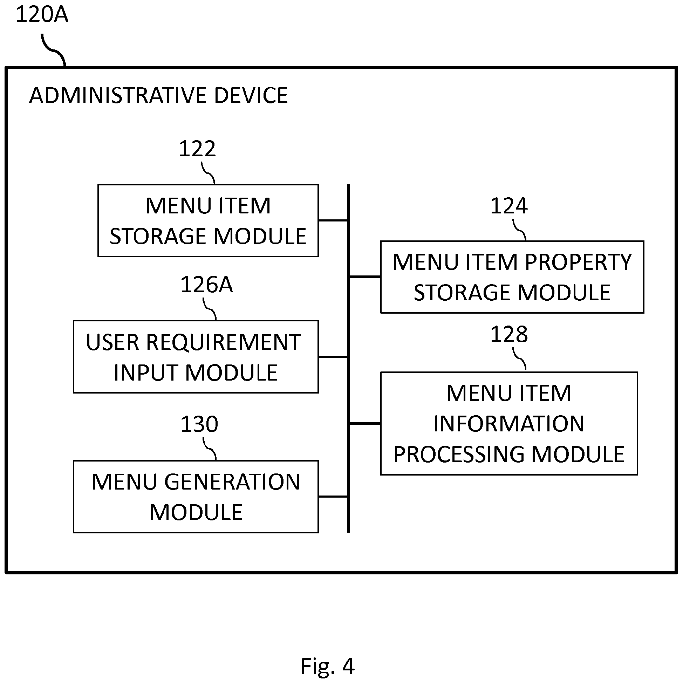

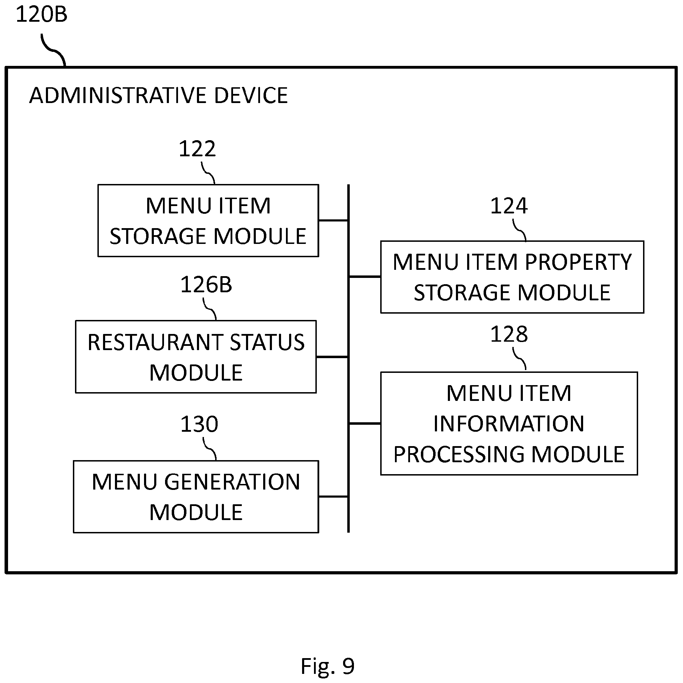

In particular illustrative examples of the disclosure the specification input module 126 can comprise a user requirement input module 126A and/or a restaurant status module 126B. An illustrative example of the disclosure with an administrative device 120A which comprises a user requirement input module 126A is shown and discussed in Figures 4 to 8 together with the corresponding description. Another illustrative example of the disclosure with an administrative device 120B which comprises a restaurant status module 126B is shown and discussed in Figures 9 to 12 together with the corresponding description.

While these illustrative examples are presented separately in this disclosure for clarity and conciseness it is explicitly contemplated that a specification input module can comprise both a user requirement input module 126A and a restaurant status module 126B and accordingly that these illustrative examples can be combined.

Particular examples of user requirement information and restaurant status information will be given below in reference to these illustrative examples.

The menu item information processing module 128 determines the actual menu items and corresponding descriptions to be included on the output menu by applying the received specification information to the plurality of potential menu items and their corresponding properties. Particular examples of how the specification information is applied are given in the illustrative examples discussed below. It is contemplated that "applying" can include one or more of selection of or filtering the potential menu items on the basis of the specification information; performing a logical operation on the basis of the specification information to determine the potential menu items; obtaining further information/data to fulfil the specification information in accordance with the requirements of the particular application; or translating data into a different format selected based on the specification information.

The menu generation module 130 is configured to generate a menu based on the actual menu items and corresponding descriptions determined by the menu item information processing module 128. From one perspective, this module could be considered as the rending or formatting of the determined actual menu items into a human readable format.

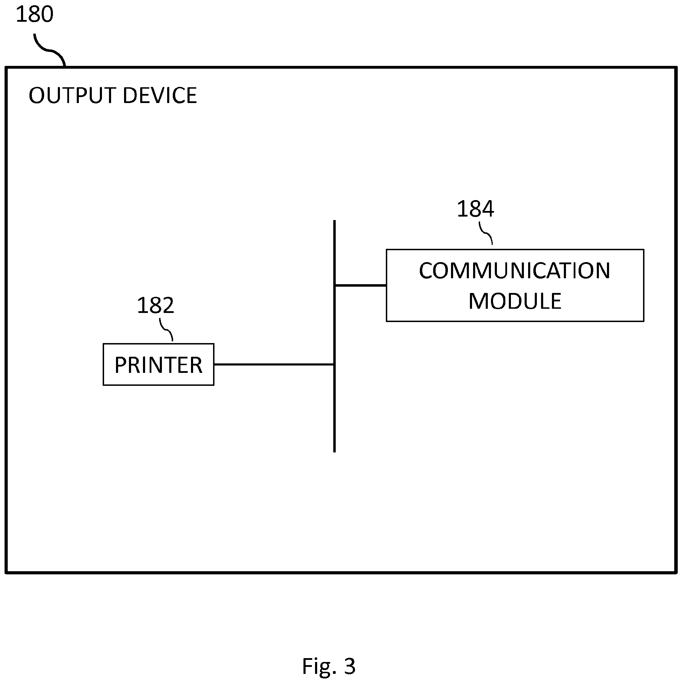

Figure 3 illustrates an example output device 180. The schematic illustration in this figure is illustrative of the elements which make up the output device 180. As shown in figure 3, the output device comprises a printer 182 and communication module 184. In some examples, one or more of these elements may be optional and the output device 180 may, for example, instead include a display..

The output device 180 is configured to output the menu generated by the menu generation module 130.

In some examples the output device comprises a printer 182. This printer can print a real-time menu on demand when required. Such a menu is convenient as it is familiar to users and does not require any additional hardware to read a real-time menu. In addition, since the menu can be printed only when required it ensures that the menu is up-to-date and avoids wasteful pre-printing, for example by pre-printing a stock of menus in each of a plurality of languages.

Further, printing a menu for a specific user or group of users allows for changes, such adjustment of the text size, colour or formatting, to be made to the menu to accommodate user requirement information, such as, medical requirements or personal preferences. For example, the content may be adapted, the text size may be increased and the font colour may be modified to enhance contrast to improve legibility for those with poor eyesight.

In some examples, the printer is a reusable paper printer which is configured to output the menu on reusable paper. An example of a suitable reusable paper system is Xerox Erasable/Reusable Paper, details of which are set out, for example, in US Patent Numbers 7549592, 7641120, 7762188 and 8304076 the entire contents of which are hereby incorporated by reference.

The use of reusable paper allows a particular sheet of paper to be used more than once thus reducing wastage and resource consumption. This in turn may enhance the practicality of providing menus on a per-user or real-time basis.

In some examples, the output device comprises a communication module 184. This communication module 184 is configured to allow output of the menu to a remote device. The remote device may be a mobile user device, such as mobile phone or table, or a dedicated screen at the venue.

The communication module 184 may be configured to output the menu to the remote device using a wired connection, such as Ethernet, USB or Firewire; a wireless connection, such as Bluetooth, Wi-Fi, cellular network or infrared; or a manual transfer using a computer-storage medium, such as CD, DVD, Blu-Ray, Memory Card or USB flash drive; according to the requirements of the particular implementation. In some examples, the menu may be output to the remote device via email, file transfer, or direct connection to a dedicated app/application.

Providing the menu to a mobile user device may be convenient for a user as the user may be familiar with such a device. Providing the menu to a dedicated screen at the venue may be convenient as it allows multiple users to see the current real-time menu. Providing the menu electronically to a remote device may reduce wastage by reducing the need to physically produce menus.

As described above, Figures 4 to 8 set out an illustrative example of the disclosure. Figure 4 schematically illustrates an administrative device 120A where the specification input module 126 comprises a user requirement input module 126A. The user requirement input module 126A is configured to receive user requirement information. For clarity, the specification input module 126 of Figure 4 is simply shown as the user requirement input module 126A. The other elements of administrative device 120A are substantially similar, except where otherwise indicated, to the corresponding elements discussed in relation to Figure 2.

In some examples, the user requirement information includes one or more user dietary requirements. These user dietary requirements can take into account one or more of: allergies, food intolerances, special medical diets, pregnancy, child/infant diets, religious/ethical diets, and weight-loss/lifestyle diets. When the menu item information processing module 128 applies these dietary requirements to the potential menu items and their corresponding properties the applying comprises selecting the potential menu items based on their ingredients and the user dietary requirements.

By way of example the handling of a number of example dietary requirements will now be discussed:
- If the user dietary requirements include a peanut allergy, the information processing module 128 can filter the potential menu items to, for example, exclude potential menu items which have properties which indicate they include peanuts or peanut products as one of their ingredients.
- If the user dietary requirements include diabetes, the information processing module 128 can filter the potential menu items to, for example, exclude potential menu items which have properties which indicate they include high amounts of sugar or processed carbohydrates.
- If the user dietary requirements include pregnancy, the information processing module 128 can filter the potential menu items to, for example, exclude potential menu items which have properties which indicate they include alcohol or meat/fish with low cooking temperatures.
- If the user dietary requirements include a religious diet, the information processing module 128 can filter the potential menu items to, for example, exclude potential menu items which have properties which indicate they include ingredients which are sourced or prepared in, for example, a non-halal manner or in a non-kosher manner.
- If the user dietary requirements include a weight-loss diet or a maximum number of calories for a meal, the information processing module 128 can filter the potential menu items to, for example, exclude potential menu items which are calculated on the basis of their properties to be high in calories.

In this manner, the menu generation system is able to generate a menu tailored to the specific dietary requirements of a particular user. Accordingly, the user can pick any item from their tailored menu in a quick, safe manner without the need to have expert knowledge and without the risk of accidentally picking an item that falls outside their user dietary requirements and thus which could harm their health or otherwise be undesired. This can be particularly useful when travelling so as to reduce the risk of accidentally selecting food that does not meet the user requirements due to a possible language barrier.

The above list is merely by way of example and many other user dietary requirements and handling methods are contemplated according to the requirements of particular implementations.

Alternatively, or additionally, the user requirement information includes one or more user languages. These can include languages indicated as understood or otherwise preferred by the user. When the menu item information processing module 128 applies these language requirements to the potential menu items and their corresponding properties the applying comprises obtaining the corresponding descriptions to be in at least one of the one or more languages.

It is contemplated that this obtaining can take a number of forms according to the requirements of the implementation. In some examples, the corresponding descriptions can be obtained by machine translation on demand, retrieval from a database of known translations or the provision of photographs of the menu item when no translation is available. This obtaining can be either by the menu item information processing module 128 itself, or by another computing device to which it is communicatively connected such as a dedicated module or web service.

In this manner, the menu generation system is able to generate on demand and output a menu in a language understood by the user thus ensuring that the user can understand the menu and avoid accidently picking menu choices that could be harmful to their health or otherwise undesired.

In some examples, the real-time menu generation system 100 includes a user input terminal 140 and the user requirement input module 126A is configured to received receive user requirement information via the user input terminal 140.

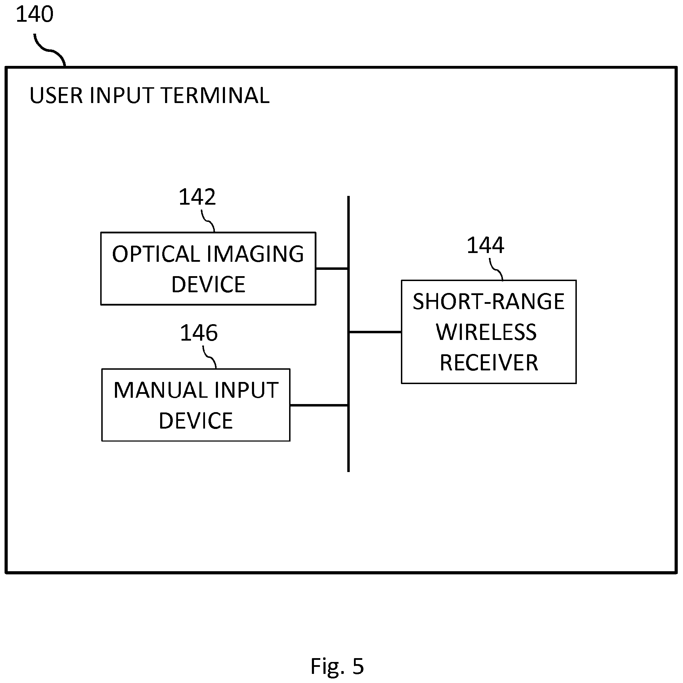

Figure 5 schematically illustrates such a user input terminal 140. As shown in the figure the user input terminal 140 includes receiving devices such as an optical imaging device 142, a short-range wireless receiver 144 and a manual input device 146. In some examples, one or more of these elements may be optional. A user input terminal can allow a user to easily enter their user requirement information into the real-time menu generation system 100.

Where the user input terminal 140 includes an optical imaging device 142, the user input terminal 140 can receive the user requirement information by reading a visual code provided by a user. In some examples, the visual code may be printed on a physical card or displayed on a mobile user device. In some examples, the visual code may directly include the user requirement information or alternatively may act as serial number or link by which the input terminal 140 may receive the user requirement information from an external source such as a database of the system 100 or web-service. The visual code may take any suitable form such as QR codes or other 1 / 2 dimensional codes according to the requirements of the implementation.

In this manner, an optical imagining device 142 allows a user to enter their user requirement information into the system 100 quickly and accurately. In addition, the user requirement information thus received can be very detailed. In some cases the code can include access information (e.g. a URL) for accessing and retrieving the user requirement information. Further, where the code itself contains the user requirement information, the system 100 can directly acquire the information and does not need to remotely retrieve the user requirement information.

Where the user input terminal 140 includes a short-range wireless receiver 144, the user input terminal 140 can receive the user requirement information by reading a short-range wireless device provided by a user. In some examples, the short-range wireless device may be part of a physical card or a mobile user device. In some examples, the short-range wireless device may directly provide the user requirement information or alternatively may provide a serial number or link by which the input terminal 140 may receive the user requirement information from an external source such as a database of the system 100 or web-service. The short-range wireless receiver 144 and device may communicate using any suitable short-range wireless communication technology such as RFID, NFC, Infrared or Bluetooth according to the requirements of the implementation.

In this manner, a short-range wireless receiver 144 allows for a user to enter their user requirement information into the system 100 quickly and accurately. In addition, the user requirement information thus received can be very detailed. Further, where the short-range wireless device directly provides the user requirement information to the system 100, the system does not need to remotely retrieve the user requirement information.

Where the user input terminal 140 includes a manual input device 146, the user input terminal 140 can receive the user requirement information by direct input from a user. The manual input device 146 may include any suitable device which enables the user to manually enter user requirement information such as a touch screen, keyboard, mouse or voice dictation according to the requirements of the implementation.

Such a manual input device 146 allows a user to enter their user requirement information while at the restaurant without the need for any special preparation in advance or the need to bring any special hardware/identifier.

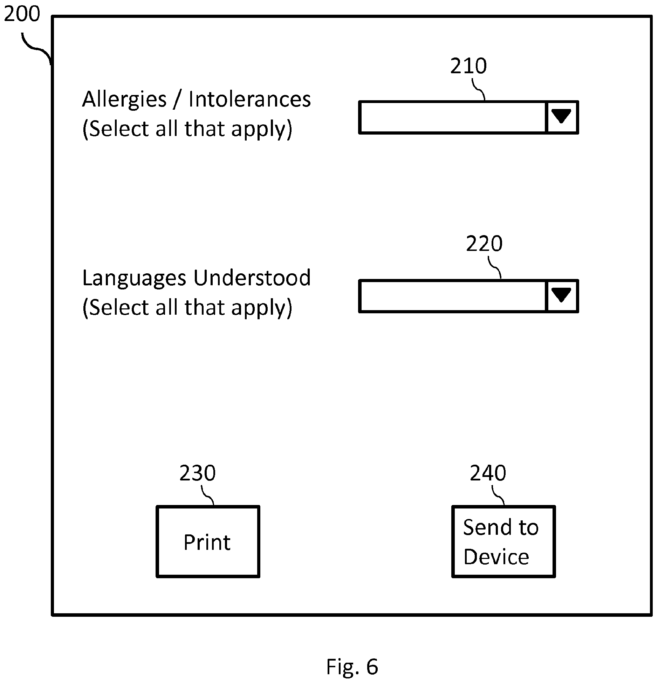

Figure 6 illustrates an example user requirement input interface 200 which could be implemented on a user input terminal 140 which includes a manual input device 146. The interface 200 includes an Allergies / Intolerances drop down list 210, a Languages Understood drop down list 220, a Print button 230 and a Send to Device button 240.

The Allergies / Intolerances drop down list 210 allows a user to select one or more allergies or intolerances they suffer from. The Languages Understood drop down list 220 allows the use to select one of more languages they understand.

The Print button 230 instructs an output device 180 which includes a printer 182 to print a menu on the basis of the user's selected user requirement information. The Send to Device button 240 instructs an output device 180 which includes a communication module 184 to output a menu on the basis of the user's selected user requirement information to a remote device such as a mobile user device.

The interface 200 shown in Figure 6 is merely an example. Many other possible interfaces are contemplated which, for example, include additional or alternative drop down lists, radio buttons, icons or free text fields to input any combination of the particular user requirement information previously discussed.

In some examples, the user requirement information may include information based on historic data of a user's menu selections or restaurants visited. Such historic data may be limited in scope to, for example, the last meal consumed at a previous restaurant, or may form a substantially complete record of all previous meals consumed and restaurants visited by a user using the present system.

Such information may be used, for example, in generating a menu to push a user towards a balanced diet. For example, if the system has a record that a user has consumed a high calorie meal at lunchtime the system can modify the menu to include a higher proportion low calorie meals. As another example, if the historic data demonstrates that a user regularly selects a particular menu item, a menu can be generated to ensure that such items are placed in prominent locations such that the user can quickly find these menu items.

For clarity, the previous discussion of user requirement information has referred to a single user's user requirement information. It is contemplated that in some examples any of the above means for entering user requirement information can consecutively or simultaneously receive user requirement information from a plurality of users.

It is further explicitly contemplated that where the system receives user requirement information from a plurality of users the menu item information processing module 128 is, in some examples, configured to apply user requirement information from the plurality of users in determining the plurality of actual menu items and corresponding descriptions such that menu is generated and output which fulfils the user requirement information from all of the plurality of users. By way of example, if a first user indicated that they were allergic to soy and a second user indicated that they were allergic to eggs the system 100 would output a menu which did not include dishes that contained either soy or eggs.

As such, if a group of users is jointly selecting menu items they can be provided with a single menu which satisfies the user requirement information for all of the users. Thus, for example, the group could order sharing platters that would not cause an adverse health reaction in any of the members of the group.

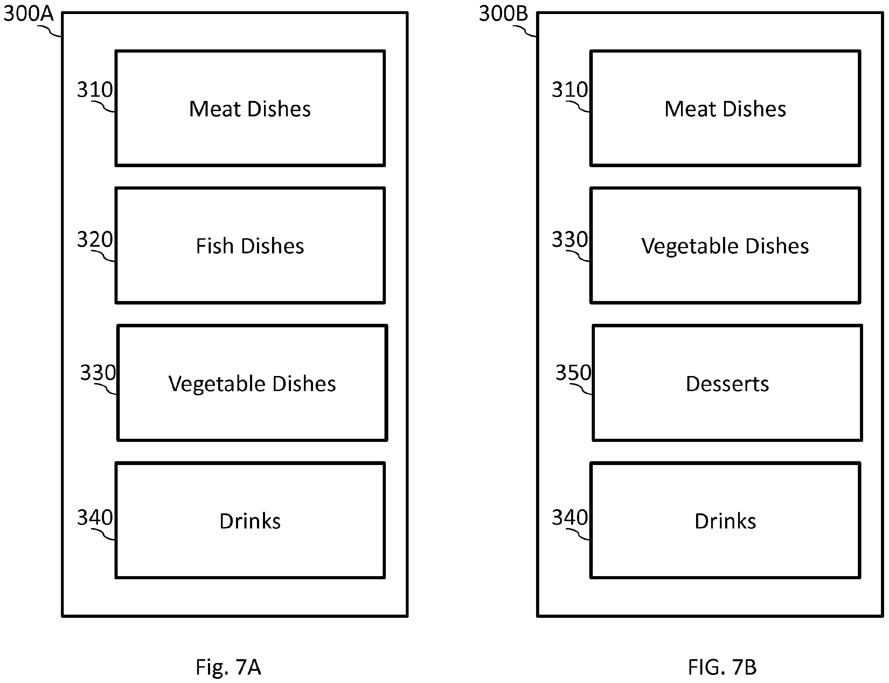

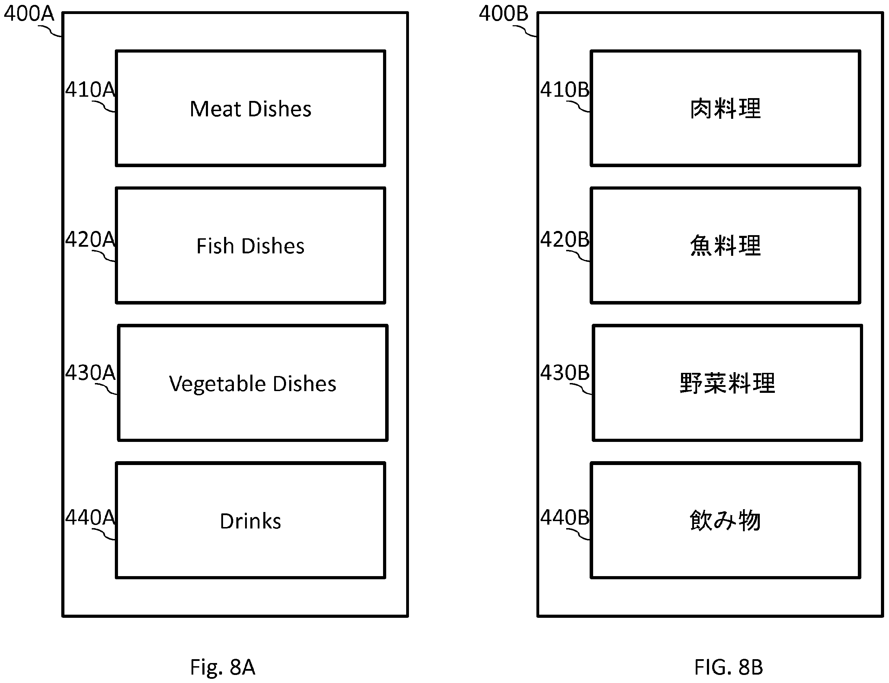

Figures 7A, 7B and Figures 8A, 8B show two examples pairs of menus which illustrate example changes which the system 100 makes in response to receiving user requirement information.

Figure 7A illustrates a menu 300A before application of user requirement information. Menu 300A depicts four categories of menu items: Meat Dishes 310, Fish Dishes 320, Vegetable Dishes 330 and Drinks 340. For clarity, the actual items within each category are not shown. This menu 300A can, for example, be the default menu used in the absence of specification information such as user requirement information or restaurant status information.

Figure 7B illustrates a menu 300B after application of user requirement information. If, for example, the system 100 receives the dietary requirement that indicates that a user is allergic to fish, the menu information processing module 128 determines that fish dishes are not to be included in output menu 300B. Accordingly, the menu information processing module 128 removes the category Fish Dishes 320. In some cases, the module can also provide an alternate acceptable category instead in this case Desserts 350.

Figure 8A illustrates a menu 400A before application of user requirement information. Menu 400A depicts four categories of menu items: Meat Dishes 410A, Fish Dishes 420A, Vegetable Dishes 430A and Drinks 440A. For clarity, the actual items within each category are not shown.

Figure 8B illustrates a menu 300B after application of user requirement information. If, for example, the system 100 receives an indication that Japanese is desired, the menu information processing module obtains corresponding description, 410B, 420B, 430B and 440B, of the menu items in Japanese.

As described above, Figures 9 to 12 set out another illustrative example of the disclosure. Figure 9 schematically illustrates an administrative device 120B where the specification input module 126 comprises a user restaurant status module 126B. The restaurant status module 126B is configured to receive restaurant status information. For clarity, the specification input module 126 of Figure 9 is simply shown as the restaurant status module 126B. The other elements of administrative device 120B are substantially similar, except where otherwise indicated, to the corresponding elements discussed in relation to Figure 2 or 4.

In some examples, the restaurant status information includes ingredient inventory information. The ingredient inventory information can take into account, for example, one or more of: the current ingredient stock level or the current ingredient cost. When the menu item information processing module 128 applies the ingredient inventory information to the potential menu items and their corresponding properties the applying comprises selecting the potential menu items based on the ingredients of the potential menu items and the ingredient inventory information.

Alternatively or in addition the restaurant status information includes historic data on user menu selections. Such historic data may be organised by category "bins" such as by time of day or day of the week. When the menu item information processing module 128 applies the historic data on user menu selections to the potential menu items and their corresponding properties the applying comprises selecting the potential menu items based on the historic popularity of menu items in the historic data.

By way of example the handling of a number of example restaurant status information will now be discussed:
- If the restaurant status information includes information that some ingredients are low in stock and others are out of stock, the information processing module can, for example, filter the potential menu items to exclude potential menu items which include ingredients below a certain stock level. The information processing module may additionally or alternatively provide corresponding description information to selected menu items which indicate the current stock level of the menu items' ingredients. In this manner the menu generation system 100 is able to generate a menu which accurately reflects/indicates the current availability of menu items.
- If the restaurant status information includes information that some ingredients are currently high in cost, the information processing module can, for example, filter the potential menu items exclude menu items which include a high-cost ingredient and include a similar substitute menu item which instead includes a low-cost ingredient. Alternatively, the module can reorder the menu items to place items which include a high-cost ingredient in a less prominent location on the menu such as further down a menu page or on a later in the menu. In this manner, the menu generation system 100 can allow for a restaurant to reduce their ingredient costs.
- If the restaurant status information includes information that a particular menu item is more popular on, for example, a Thursday than the rest of the week the information processing module can, for example, filter the potential menu items to ensure that this particular menu item is more likely to appear in a prominent location on menus output on Thursdays. In this manner, the menu generation system 100 can reduce the time a user is likely to spend searching a menu by ensuring that menu items that are historically more popular at that time are more prominent and hence easier to find.

The above list is merely by way of example and many other restaurant status information and handling methods are contemplated according to the requirements of particular implementations.

In some examples, the restaurant status information may be received by the restaurant status module 126B from a database or inventory management system which may, for example, be implemented as part of the administrative device 120B, another part of the menu generation system 100, or an external device which is communicatively connected to the menu generation system 100 according to the requirements of the implementation.

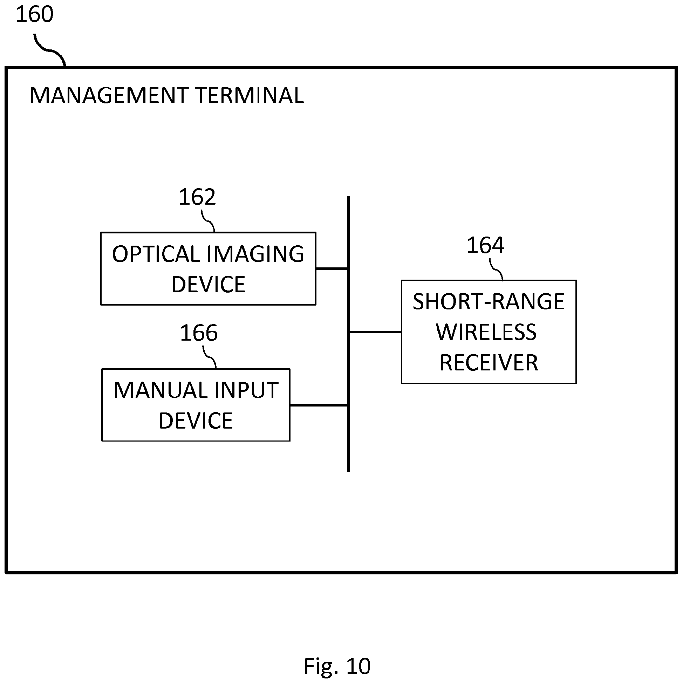

In some examples, the real-time menu generation system 100 includes a management terminal 160 as illustrated schematically in Figure 10. The management terminal 160 is communicatively connected to the administrative device and is configured to allow entry into one or more of the menu item storage module 122, the menu item property storage module 124 and a restaurant status module 126B.

As shown in Figure 10, the management terminal 160 includes receiving devices such as an optical imaging device 162, a short-range wireless receiver 164 and a manual input device 166. In some examples, one or more of these elements may be optional. Information on potential menu items, properties of potential menu item and restaurant status information can be entered, by for example a restaurant manager, into the management terminal 160 in a substantially similar manner as a user can enter user requirement information into the user input terminal 140 described-above in relation to Figure 5 and the corresponding description.

Accordingly, the management terminal 160 allows for quick and efficient entry of information in a substantially similar manner to the effects achieved with the user input terminal 140. By way of example, the management terminal may configured to receive information from reading visual codes or short-range wireless devices included together with newly delivered stock such that information on potential menu items, properties of potential menu item and restaurant status information can be entered quickly and easily.

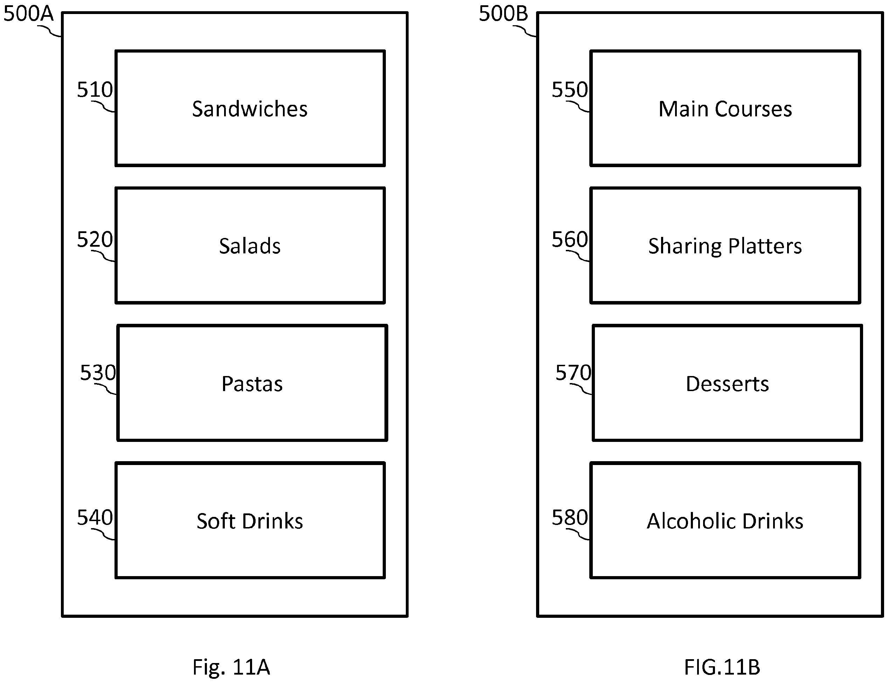

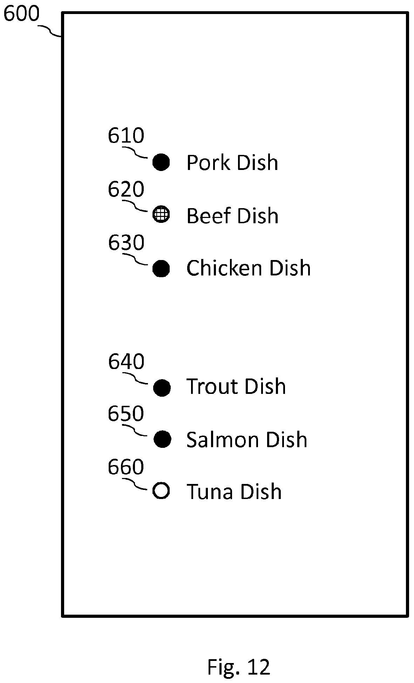

Figures 11A, 11B and Figures 12 show examples menus which illustrate the changes which the system 100 can make in response to receiving restaurant status information.

Figures 11A and 11B illustrate example menus output by the system 100 after application of historic data on user menu selections. Figure 11A is a lunchtime menu which depicts four categories of menu items which have been established as having high historic popularity at lunchtime: Sandwiches 510, Salads 520, Pastas 530 and Soft Drinks 540. For clarity, the actual items within each category are not shown.

Figure 11B is a dinnertime menu which depicts four categories of menu items which have been established as having high historic popularity at dinnertime: Main Courses 550, Sharing Platters 560, Desserts 570 and Alcoholic Drinks 580. Again for clarity, the actual items within each category are not shown.

In this manner, the system 100 can only display, or display more prominently, menu items which are likely to be chosen at the time the menu is generated thereby making the selection of information to include on the menu more accurate. Accordingly, a user can quickly find a dish which is popular at the current time. In addition, the menu can be made shorter by avoiding unnecessarily including menu items which are unpopular at the particular time that the menu is output hence reducing wastage of resources from printing unnecessarily long menus including currently undesired items.

Figure 12 illustrates an example menu 600 which after the application of ingredient stock information by the menu item information processing module 128 is able to indicate the current availability of menu items. Menu 600 depicts six menu items with corresponding availability levels. Specifically the menu indicates that Tuna Dish 660 is out of stock, Beef Dish 620 is low stock and Pork Dish 610, Chicken Dish 603, Trout Dish 640, Salmon Dish 650 have normal stock. In this manner the system 100 can generate a menu which straightforwardly indicates to a user which dishes are currently unavailable and which dishes may become unavailable in the near future.

In Figure 12 the stock level indicators are depicted using dots with different shading, however, any suitable indicator could alternately be used for example a "traffic light" colour system or a numerical indicator depending on the requirements of the application. Also, in some examples, menu items that are out of stock or that can no longer be ordered can be omitted from the menu altogether.

The above-detailed description has been written primarily from the point of view of a system 100. Corresponding methods to the above described operation of the system 100 are explicitly contemplated.

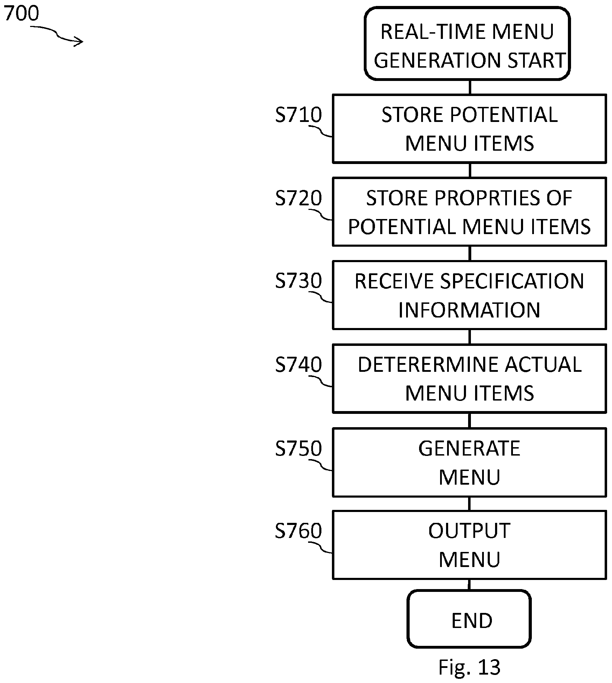

An example method 700 is depicted in Figure 13 which includes the following steps. First, at step S710, a plurality of potential menu items are stored by an administrative device. The method then proceeds to step S720. At step S720 properties for each of the plurality of potential menu items are stored by the administrative device wherein the menu item properties include at least one of more ingredients that are used in each of the plurality of potential items. The method then proceeds to step S730. At step S730 specification information comprising at least one of user requirement information or restaurant status information is received by the administrative device. The method then proceeds to step S740. At step S740 a plurality of actual menu items and corresponding descriptions are determined by the administrative device by applying the retrieved specification information to the stored plurality of potential menu items and corresponding properties. The method then proceeds to step S750. At step S750 a menu based on the determined actual menu items and corresponding descriptions is generated by the administrative device. Finally, the method then proceeds to step S760. At step S760 the generated menu is output by an output device.

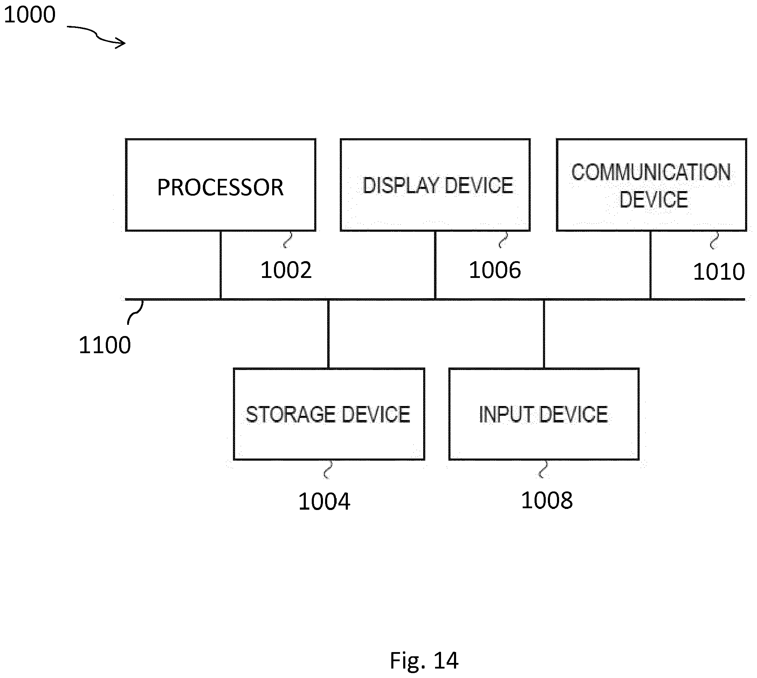

Figure 14 schematically illustrates an example computer hardware implementation 1000 which is suitable for implementing any of administrative device 120/120A/120B, management terminal 160, user input terminal 140 and output device 180 either individually or in combination.

This example hardware implementation 1000 includes a processor 1002, a storage device 1004, a display device 1006, an input device 1008, and a communication device 1010 which are all connected via one or more communications busses 1100. The processor 1002 executes arithmetic processing in accordance with a program or other types of instructions. The storage device 1004 comprises, for example, volatile memory such as RAM and/or non-volatile memory such as a hard disk, and stores program information and/or program data. The display device 1006 is, for example a display, and provides a display image. The input device 1008 is, for example, a keyboard or touch panel for input. The communication device 1010 is operable to exchange results processed by the processor 1002 and information stored in the storage device 1004 with other computers.

In some examples, one or more of these components may be optional. Alternatively, or in addition in some examples the hardware implementation 1000 may include the additional input and output components described throughout the detailed description.

Therefore, as will be apparent from the above description real-time menu generation systems and methods has been described which are capable of generating and outputting a menu which is updated in real-time to take into account user requirement information and/or restaurant status information.

## Claims

1. A menu generation system for real-time generation of a restaurant menu, **characterized by** comprising:
an administrative device which comprises:
a menu item storage module configured to store a plurality of potential menu items;
a menu item property storage module configured to store menu item properties for each of the plurality of potential menu items wherein the menu item properties include at least one or more ingredients that are used in each of the plurality of potential menu items;
a specification input module configured to receive specification information comprising at least one of user requirement information or restaurant status information;
a menu item information processing module that is configured to determine a plurality of actual menu items and corresponding descriptions by applying the received specification information to the plurality of potential menu items and corresponding properties;
a menu generation module configured to generate a menu based on the determined actual menu items and corresponding descriptions; and
an output device communicatively connected to the administrative device and which is configured to output the generated menu.

2. The menu generation system according to claim 1, wherein the output device comprises a printer configured to output the menu on paper.

3. The menu generation system according to claim 2, wherein the printer is a reusable paper printer which is configured to output the menu on reusable paper.

4. The menu generation system according to any preceding claim, wherein the output device comprises a communication module configured to output the menu to a remote device.

5. The menu generation system according to any preceding claim, wherein the specification input module comprises a user requirement input module configured to receive user requirement information, and
wherein the user requirement information comprises one of more user dietary requirements, and wherein the applying the received specification information comprises selecting potential menu items based on their ingredients and the user dietary requirements.

6. The menu generation system according to any preceding claim, wherein the specification input module comprises a user requirement input module configured to receive user requirement information, and
wherein the user requirement information comprises one or more user languages and wherein the applying the received specification information comprises obtaining the corresponding descriptions to be in at least one of the one or more user languages.

7. The menu generation system according to any preceding claim, wherein the menu generation system comprises a user input terminal communicatively connected to the administrative device, and
wherein the specification input module comprises a user requirement input module configured to receive user requirement information via the user input terminal.

8. The menu generation system according to claim 7, wherein the user input terminal comprises an optical imaging device configured to receive user requirement information by reading a visual code provided by the user.

9. The menu generation system according to claim 7 or claim 8, wherein the user input terminal comprises a short-range wireless receiver configured to receive user requirement information by reading a short-range wireless device provided by a user.

10. The menu generation system according to claim 7, 8 or 9, wherein the user input terminal comprises a manual input device configured to receive user requirement information directly from a user.

11. The menu generation system according to any of claims 5 to 9, wherein the user requirement input module is configured to receive the user requirement information from a plurality of users.

12. The menu generation system according to any preceding claim, wherein the specification input module comprises a restaurant status module configured to receive restaurant status information, and
wherein the restaurant status information comprises ingredient inventory information, and wherein the applying the received specification information comprising selecting potential menu items based on their ingredients and the ingredient inventory information.

13. The menu generation system according to any preceding claim, wherein the specification input module comprises a restaurant status module configured to receive restaurant status information, and
wherein the restaurant status information comprises historic data on user menu selections and wherein the applying the received specification information comprises selecting potential menu items based on the historic popularity of menu items in the historic data.

14. The menu generation system according to any preceding claim, wherein the menu generation system comprises a management terminal communicatively connected to the administrative device which is configured to allow for entry of information into one or more of the menu item storage module, the menu item property storage module and a restaurant status module.

15. A method for real-time generation of a restaurant menu, the method being **characterized by** comprising the steps of:
storing, by an administrative device, a plurality of potential menu items;
storing, by the administrative device, properties for each of the plurality of potential menu items wherein the menu item properties include at least one or more ingredients that are used in each of the plurality of potential menu items;
receiving, by the administrative device, specification information comprising at least one of user requirement information or restaurant status information;
determining, by the administrative device, a plurality of actual menu items and corresponding descriptions by applying the received specification information to the stored plurality of potential menu items and corresponding properties;
generating, by the administrative device, a menu based on the determined actual menu items and corresponding descriptions;
outputting, by an output device, the generated menu.

## Amended claims

### Amended claims in accordance with Rule 137(2) EPC.

1. A menu generation system (100) for real-time generation of a restaurant menu, **characterized by** comprising:
an administrative device (120) which comprises:
a menu item storage module (122) configured to store a plurality of potential menu items;
a menu item property storage module (124) configured to store menu item properties for each of the plurality of potential menu items wherein the menu item properties include at least one or more ingredients that are used in each of the plurality of potential menu items;
a specification input module (126) configured to receive specification information comprising at least one of user requirement information or restaurant status information,
wherein the specification input module comprises a user requirement input module (126A) configured to receive user requirement information, and
wherein the user requirement information comprises one or more user dietary requirements;
a menu item information processing module (128) that is configured to determine a plurality of actual menu items and corresponding descriptions by applying the received specification information to the plurality of potential menu items and corresponding properties, wherein the applying the received specification information comprises selecting potential menu items based on their ingredients and the user dietary requirements;
a menu generation module (130) configured to generate a menu based on the determined actual menu items and corresponding descriptions; and
an output device communicatively connected to the administrative device and which is configured to output the generated menu.

2. The menu generation system according to claim 1, wherein the output device comprises a printer configured to output the menu on paper.

3. The menu generation system according to claim 2, wherein the printer is a reusable paper printer which is configured to output the menu on reusable paper.

4. The menu generation system according to any preceding claim, wherein the output device comprises a communication module configured to output the menu to a remote device.

5. The menu generation system according to any preceding claim, wherein the specification input module comprises a user requirement input module configured to receive user requirement information, and
wherein the user requirement information comprises one or more user languages and wherein the applying the received specification information comprises obtaining the corresponding descriptions to be in at least one of the one or more user languages.

6. The menu generation system according to any preceding claim, wherein the menu generation system comprises a user input terminal communicatively connected to the administrative device, and
wherein the specification input module comprises a user requirement input module configured to receive user requirement information via the user input terminal.

7. The menu generation system according to claim 6, wherein the user input terminal comprises an optical imaging device configured to receive user requirement information by reading a visual code provided by the user.

8. The menu generation system according to claim 6 or claim 7, wherein the user input terminal comprises a short-range wireless receiver configured to receive user requirement information by reading a short-range wireless device provided by a user.

9. The menu generation system according to claim 6, 7 or 8, wherein the user input terminal comprises a manual input device configured to receive user requirement information directly from a user.

10. The menu generation system according to any preceding claim, wherein the user requirement input module is configured to receive the user requirement information from a plurality of users.

11. The menu generation system according to any preceding claim, wherein the specification input module comprises a restaurant status module configured to receive restaurant status information, and
wherein the restaurant status information comprises ingredient inventory information, and wherein the applying the received specification information comprising selecting potential menu items based on their ingredients and the ingredient inventory information.

12. The menu generation system according to any preceding claim, wherein the specification input module comprises a restaurant status module configured to receive restaurant status information, and
wherein the restaurant status information comprises historic data on user menu selections and wherein the applying the received specification information comprises selecting potential menu items based on the historic popularity of menu items in the historic data.

13. The menu generation system according to any preceding claim, wherein the menu generation system comprises a management terminal communicatively connected to the administrative device which is configured to allow for entry of information into one or more of the menu item storage module, the menu item property storage module and a restaurant status module.

14. A method (700) for real-time generation of a restaurant menu, the method being **characterized by** comprising the steps of:
storing (S710), by an administrative device, a plurality of potential menu items;
storing (S720), by the administrative device, properties for each of the plurality of potential menu items wherein the menu item properties include at least one or more ingredients that are used in each of the plurality of potential menu items;
receiving (S730), by the administrative device, specification information comprising user requirement information, wherein the user requirement information comprises one or more user dietary requirements;
determining (S740), by the administrative device, a plurality of actual menu items and corresponding descriptions by applying the received specification information to the stored plurality of potential menu items and corresponding properties, wherein the applying the received specification information comprises selecting potential menu items based on their ingredients and the user dietary requirements;
generating (S750), by the administrative device, a menu based on the determined actual menu items and corresponding descriptions;
outputting (S760), by an output device, the generated menu.
